## Europäisches Patentamt

## European Patent Office

## Office européen des brevets

(11) Numéro de publication: **0 121 835**
**B1**

(12) **FASCICULE DE BREVET EUROPÉEN**

(45) Date de publication du fascicule du brevet:
23.07.86

(51) Int. Cl.⁴: **B 60 C 11/02**

(21) Numéro de dépôt: **84103129.7**

(22) Date de dépôt: **21.03.84**

(54) **Bande de roulement pour rechaper des pneumatiques.**

(30) Priorité: **12.04.83 FR 8306071**

(43) Date de publication de la demande:
**17.10.84 Bulletin 84/42**

(45) Mention de la délivrance du brevet:
**23.07.86 Bulletin 86/30**

(84) Etats contractants désignés:
**DE GB IT NL**

(56) Documents cité:
**DE-A-2 642 990**
**DE-B-1 232 845**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Budrioli, Elio, Corso Tassoni N.81, I-10143 Turin (IT)**

(74) Mandataire: **Hiebel, Robert, MICHELIN & CIE - Service K. Brevets, F-63040 Clermont- Ferrand Cedex (FR)**

LIBER, STOCKHOLM 1986

## Description

L'invention concerne une bande de roulement prévulcanisée possédant à l'état libre une structure hélicoïdale qui est utilisable pour rechaper des pneumatiques.

Le plupart des pneumatiques dont la bande de roulement est usée sont rechapés à l'aide de bandes de roulement prévulcanisées, lisses ou avec un dessen de sculpture prémoulé, qui sont vendues dans le commerce sous forme d'une bande de 7—8 m de longueur ou sous forme d'anneaux. Les bandes de roulement de grande longueuer sont plates, c'est-à-dire sans aucune courbure, et soit sont dépourvues d'ailes venant recouvrir les flancs des pneus rechapés, soit sont pourvues d'ailes très petites. Elles peuvent en outre être enduites d'une couche adhésive revêtue d'une feuille intercalaire en matière plastique qui permet l'enroulement de la bande de roulement sur elle-même sans qu'il y ait de problèmes de collage. Une telle bande de roulement est appliquée directement ou avec interposition d'un profilé sur la carcasse. Le rechapage effectué à l'aide de ces bandes de roulement qui n'intéresse que le sommet du pneumatique est appelé rechapage "top-cap".

Il est bien connu que lorsqu'on utilise une bande de roulement plate sans ailes ou avec des ailes très petites pour rechaper des pneumatiques, les parties latérales de la bande de roulement sont le siège de contraintes importantes qui font qu'il faut exercer de grandes pressions sur ces zones latérales afin de bien les appliquer sur la carcasse du pneumatique et qu'il est pratiquement impossible d'obtenir des pneus rechapés ayant l'aspect de pneumatiques neufs. En effet, ces pneus rechapés présentent un grand nombre d'irrégularités au niveau des extrémités des bords latéraux de la bande de roulement rapportée sur le pneumatique. Pour éviter ces irrégularités, il a été proposé dans la DE—A—26 42 990 une bande de roulement possédant une succession de coupures transversales disposées sur ses deux bords. Ce problème est encore plus aigu lorsque les ailes de la bande de roulement plate sont très larges, c'est-à-dire lorsqu'elles s'étendent sur une moitié ou plus de la hauteur des flancs et c'est pourquoi de telles bandes de roulement ne sont pas commercialisées. Pout remédier à cet inconvénient, il a été proposé dans la DE—B—1 232 845 une bande de roulement prévulcanisé avec de larges ailes, lisse ou munie d'un dessin de sculpture, possédant au moins une entaille circonférentielle au niveau de l'épaule de la bande de roulement délimitant la partie centrale des ailes de la bande de roulement et possédant en outre un grand nombre d'entailles transversales se succédant dans le sens longitudinal. Si cette solution permet effectivement d'éviter la présence de contraintes au niveau des ailes de la bande de roulement, elle présente cependant un double inconvénient: celui de nécessiter la réalisation de très nombreuses soudures au niveau des blocs de gomme délimités par les entailles transversales, lesquelles soudures sont très difficiles à réaliser correctement de sorte qu'elles sont en réalité une grande source d'irrégularités et de défauts d'aspect sur le pneumatique rechapé, et celui d'empêcher l'utilisation d'un dessin de sculpture à rainures transversales.

Les bandes de roulement de pneumatiques utilisées pour rechaper les pneumatiques se présentent également sous la forme d'anneaux plats ou plus généralement comportant de larges ailes et un certain rayon de courbure. Le rechapage avec ces bandes de roulement en anneau permet d'obtenir des pneumatiques ayant l'aspect de pneus neufs sans irrégularités ou défauts d'aspect. L'inconvénient majeur du rechapage affectué à l'aide d'une bande de roulement en anneau est qu'il faut pratiquement utiliser pour chaque dimension de pneumatique à rechaper un anneau qui ait la même dimension que la carcasse du pneumatique à rechaper ou à la rigueur une dimension légérement inférieure, ce qui nécessite alors l'utilisation d'un dispositif onéreux permettant d'étirer l'anneau pour l'appliquer sur la carcasse du pneumatique à rechaper. Pour être en mesure de rechaper les pneumatiques usés, il est donc nécessaire d'avoir à sa disposition un important stock de bandes de roulement en anneau de dimensions différentes.

Ces bandes de roulement en anneau sont, tout comme les bandes de roulement plates, enroulées sur elles-mêmes, ce qui crée à l'extrémité de l'anneau enroulé des contraintes qui, en cas de stockage prolongé, sont à l'origine de craquelures dans la gomme de la bande de roulement. Enfin, la fabrication des bandes de roulement en anneau nécessite de lourds investissements en matériel de production sans permettre la fabrication d'un nombre élevé d'annéaux par jour.

L'invention a pour but de remédier aux inconvénients signalés ci-dessus par la réalisation d'une bande de roulement prévulcanisée ayant de larges ailes venant s'appliquer sur les flancs du pneumatique à rechaper qui soit utilisable pour rechaper différentes dimensions de pneumatiques sans nécessiter un matériel de production onéreux et qui permette d'obtenir un pneumatique rechapé sans irrégularités et défauts d'aspect.

L'invention a pour objet une bande de roulement prévulcanisée pour rechaper des pneumatiques. qui posséde des ailes venant s'appliquer sur les flancs du pneumatique à rechaper, lisse ou avec dessin de sculpture, caractérisée en ce qu'elle posséde à l'état libre une structure hélicoïdale et dont le diamétre de l'hélice correspond sensiblement à celui des pneumatiques à rechaper.

La bande de roulement conforme à l'invention peut avoir une section transversale plate ou un rayon de courbure plus ou moins important qui peut être égal, supérieur ou inférieur à celui du pneumatique à rechaper. Elle présente les avantages qu'offrent les bandes de roulement plates de grande longueur et les avantages qu'offrent les bandes de roulement en anneau sans en posséder les inconvénients. En effet, la bande de roulement conforme à l'invention peut avoir une longueur importante de l'ordre de 50 mètres ou plus ce qui permet: d'utiliser la longueur qui est exactement nécessaire pour rechaper chacun des pneumatiques quelles que soient les dimensions de ceux-ci, de stocker cette bande de roulement enroulée sur elle-même en présence ou en absence d'un noyau sans qu'il y ait existence de contraintes pouvant donner naissance à des craquelures en cas de stockage prolongé, l'obtention de pneus rechapés dépourvus d'irrégularités à la base des ailes de la bande de roulement, donc d'obtenir des pneus ayant un aspect comparable à celui de pneus neufs, d'utiliser un matériel de fabrication de la bande de roulement ne nécessitant pas de plus gros investissements que ceux utilisés pour fabriquer classiquement les bandes de roulement plates de grande longueur, de vulcaniser le pneu revêtu de la bande de roulement conforme à l'invention avec tous les appareils de vulcanisation à froid existant sur la marché.

Selon une première forme d'exécution préférentielle, la bande de roulement conforme à l'invention possède des extrémités qui sont parallèles à l'axe de l'hélice et qui ne sont pas perpendiculaires aux bords de la bande de roulement. Selon une seconde forme d'exécution préférentielle, la bande de roulement conforme à l'invention possède des extrémités faisant avec l'axe de l'hélice un angle égal à celui de l'angle de l'hélice. Lorsqu'on prélève d'une bande de roulement de grande longueur la longueur appropriée pour rechaper un pneumatique et qu'on l'applique sur le pneu à rechaper, on réalise la coupe et l'ajustage des extrémités en conservant cet angle.

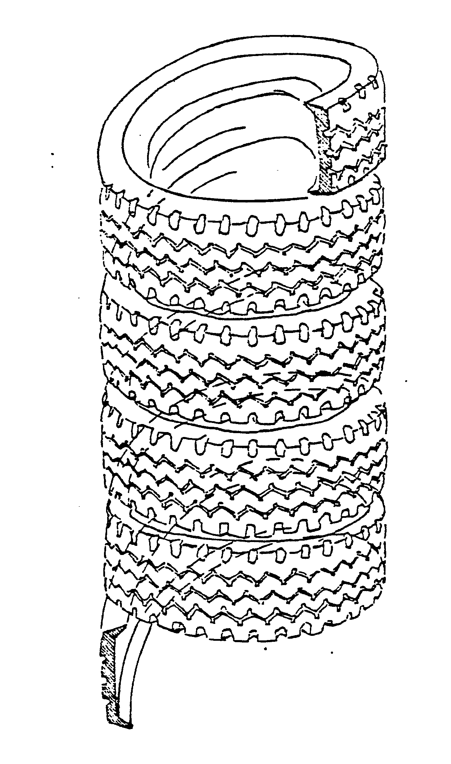

En raison de la structure hélicoïdale de la bande de roulement conforme à l'invention, telle que représentée à la figure unique, lorsqu'on applique sur le pneu à rechaper la bande de roulement ayant la dimension appropriée, il n'y a pas de déplacement de la fibre neutre de la bande de roulement et de ce fait, il n'y a aucun changement de diamètre de celle-ci tant en ce qui concerne le diamètre intérieur que le diamètre extérieur. Il en résulte qu'au moment de la pose de la bande de roulement sur le pneu à rechaper, la fibre neutre de celle-ci est à 0° et est seulement soumise à une torsion correspondant à la largeur de la bande de roulement sur une longueur égale au développement du pneu à rechaper. Cette torsion est très bien compensée par l'élasticité de la gomme constituant la bande de roulement.

La bande de roulement conforme à l'invention peut, comme connu en soi, posséder à sa base des aspérités et/ou être enduite d'une couche adhésive et d'un revêtement plastique amovible empêchant l'adhésion de la gomme sur elle-même.

La bande de roulement conforme à l'invention peut être utilisée pour le rechapage des pneumatiques de la même manière que les bandes de roulement plates de grande longueur traditionnelles. Elle peut avoir une très grande longueur (50 m) bien que fabriquée dans un moule relativement petit et être ensuite coupée en tronçons de longueur égale au développement de chaque dimension de chaque pneumatique à rechaper. Elle peut indifféremment posséder des rainures longitudinales, transversales ou des blocs.

La prévulcanisation de la bande de roulement crue peut se faire par les procédés classiquement utilisés, c'est-à-dire par exemple par chauffage, par irradiations émanant de sources émettrices diverses, par microondes, etc.

La bande de roulement peut être en caoutchouc naturel et/ou en caoutchoucs synthétique divers. Elle comprend en outre les charges renforçantes et plastifiantes habituelles, ainsi que le système de vulcanisation approprié en fonction du procédé de prévulcanisation utilisé.

**Revendications**

1. Bande de roulement prévulcanisée pour rechaper des pneumatiques qui possède des ailes venant s'appliquer sur les flancs du pneumatique à rechaper, lisse ou avec un dessin de sculpture, caractérisée en ce qu'elle possède à l'état libre une structure hélicoïdale et en ce que le diamètre de l'hélice correspond sensiblement à celui des pneumatiques à rechaper.

2. Bande de roulement selon la revendication 1, caractérisée en ce que ses extrémités sont parallèles à l'axe de l'hélice.

3. Bande de roulement selon la revendication 1, caractérisée en ce que ses extrémités font avec l'axe de l'hélice un angle égal à celui de l'angle de l'hélice.

4. Bande de roulement selon l'une quelconque des revendications 1, 2 et 3, caractérisée en ce qu'elle a une très grande longueur.

5. Bande de roulement selon l'une quelconque des revendications 1, 2 et 3, caractérisée en ce qu'elle a une longueur égale au développement du pneu à rechaper.

**Patentansprüche**

1. Vorvulkanisierter Laufstreifen zum Runderneuern von Luftreifen, der Seitenteile besitzt, die an den Flanken des rundzuerneuernden Reifens zur Anlage kommen, und der glatt ist oder eine Profilierung aufweist, dadurch gekennzeichnet, daß er in freiem Zustand eine Spiralstruktur aufweist, und der Durchmesser der Spirale etwa dem Durchmesser der rundzuerneuernden Reifen entspricht.

2. Laufstreifen nach Anspruch 1, dadurch gekennzeichnet, daß seine Enden parallel zur Achse der Spirale sind.

3. Laufstreifen nach Anspruch 1, dadurch gekennzeichnet, daß seine Enden mit der Achse der Spirale einen Winkel bilden, der gleich dem Spiralwinkel ist.

4. Laufstreifen nach einem der Ansprüche 1 bis 3, dadurch gekennzeichnet, daß er eine sehr große Länge besitzt.

5. Laufstreifen nach einem der Ansprüche 1 bis 3, dadurch gekennzeichnet, daß er eine Länge besitzt, die gleich dem Umfang des rundzuerneuernden Reifens ist.

## Claims

1. A prevulcanized tread for recapping tyres having flanges which become applied on sidewalls of the tyre to be recapped, the tread being smooth or with a sculptured design, characterized by the fact that, in free state, it has a helicoïdal structure and by the fact that the diameter of the helix corresponds substantially to the diameter of the tyres to be recapped.

2. A tread according to claim 1, characterized by the fact that its ends are parallel to the axis of the helix.

3. A tread according to claim 1, characterized by the fact that its ends form with the axis of the helix an angle equal to the helix angle.

4. A tread according to any of claims 1, 2 and 3, characterized by the fact that it is of very great length.

5. A tread according to any of claims 1, 2 and 3, characterized by the fact that it has a length equal to the developed length of the tyre to be recapped.